(19) Europäisches Patentamt
European Patent Office
Office européen des brevets

(11) Publication number: 0 284 604 B1

(12) EUROPEAN PATENT SPECIFICATION

(45) Date of publication of the patent specification: 06.09.89

(51) Int. Cl.⁴: H 02 J 3/38, H 02 M 7/48

(21) Application number: 86903381.1

(22) Date of filing: 20.06.86

(86) International application number: PCT/EP 86/00369

(87) International publication number: WO 87/00701 (29.01.87 Gazette 87/3)

(54) SYNCHRONIZING CIRCUIT FOR A PLURALITY OF POWER UNITS.

(30) Priority: 16.07.85 IT 2158385

(43) Date of publication of application: 05.10.88 Bulletin 88/40

(45) Publication of the grant of the patent: 06.09.89 Bulletin 89/36

(84) Designated Contracting States: AT BE CH DE FR GB LI LU NL SE

(56) References cited:
WO-A-80/00767
FR-A-2 310 023
FR-A-2 478 391
US-A-3 710 133

(73) Proprietor: ITALTEL SOCIETA ITALIANA TELECOMUNICAZIONI s.p.a., P.le Zavattari, 12, I-20149 Milano (IT)

(72) Inventor: LENTINI, Salvatore, Via TS 12 nr. 2, I-90147 Palermo (IT)
Inventor: PATTI, Giuseppe, Via Di Marco, 2, I-90143 Palermo (IT)

(74) Representative: Coggi, Giorgio, ITALTEL Società Italiana Telecomunicazioni s.p.a. (Servizio Brevetti) Casella Postale 10, I-20019 Settimo Milanese (MI) (IT)

EP 0 284 604 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a circuit for synchronizing a plurality of power units one with another, particularly of the type used in power stations for telecommunication systems.

Usually the latter are constituted by a plurality of power units (such as inverters, etc.) connected in parallel one with another. The parallel connection is used when the power station has to generate such a power that a single power unit could not supply and therefore the required power is supplied by a plurality of power units connected in parallel one with another. Besides the units necessary to provide the operating power, at least one additional unit is usually required in order to have a hot, active reserve in case of failure of one of the said operative units. In almost all applications there is the problem that the said units must be synchronized one with another and/or with the electrical power distribution line (i. e.: the mains).

In particular synchronizing operations are necessary when the said units are DC-DC converters because, in case of a phase difference among the single units, low frequency interferences which lap over the useful signal may be registered.

On the other hand, when the said power units are inverters, the synchronizing means are absolutely necessary, either to avoid damages hereinafter described, or to overcome the technical troubles which may arise from the switching power station-power distribution line.

It is useful to point out that the inverters are constituted by units adapted to receive a direct current on the input and to deliver an output alternating current having the same characteristics of the power distribution line.

The above mentioned switching must be carried out however with phase continuity, otherwise the single units will be pulled in to the mains at differentiated speed and cause a phase irregularity of the single units which compose the power station.

The inverters of the latest generation are characterized by the fact that they have an output impedance that is sensibly low in order to approximate the characteristics of an ideal voltage generator. Said characteristic implies a perfect synchronism among the inverters of a same station, because if one of them is not in phase with the remaining units, the power delivered by the remaining units is reversed into the unit which is out of phase with a possible damage to the same.

According to some well-known solutions the synchronization troubles above mentioned may be solved by sending to a common branch point the clock signals generated by the single inverters. A reference clock signal is thus created on the said branch point that in working condition has a frequency equal to the arithmetical average of the inverters' frequencies. The devices are synchronized on the reference clock signal.

The above circuital arrangement is known, for example, from FR-A-2.478.391 where the control units of each inverter are connected each other by a bus: each control unit sends its pulse control signal to said bus and the first pulse control signal synchronizes the other control units, resetting the relevant reference generators.

This system presents however the inconvenience that the pulling in field for the different oscillators must be limited in order to maintain the average frequency within acceptable values. Furthermore, the connection or disconnection of an inverter causes a frequency transient on the inverters actually operating.

Other solutions, that are also well-known, provide the generation of a master clock signal through a central oscillator on which the single inverters are synchronized. This solution does not present the inconvenience relating of the connection transient described above, (because the inverter is connected once the synchronization has been adjusted), but on the other hand the following troubles may arise:

– it requires a slave oscillator, operating in phase with the master oscillator in order to carry out the switching with phase continuity, when necessary;

– it introduces limits to the system's reliability due to the circuits provided for the master-slave switching;

– the cost of the structure described above (master oscillator, slave oscillator, switching circuits) constitutes a heavy item in the cost of the station when it is composed by only two inverters.

The invention as claimed is intended to solve the problem of realizing a circuit without the inconveniences mentioned above and at the same time it is suitable to switch the load to the electrical power distribution line without creating phase differences among the single inverters of the power station.

A circuit arrangement according to our invention differs from the other circuits known, such as FR-A-2.478.391, in that each synchronizing unit, connected to each power unit, has been designed to receive an external activation signal on its input and to be connected to the other synchronizing units by means of a first and a second bus. The first synchronizing unit which receives said activation signal is characterized as the master unit, which applies a predetermined polarity to the first bus and delivers a clock signal to the second bus in order to synchronize the other units which are characterized as slave units, as response to the detection of said polarity.

When the master no more receives said activation signal on its input, it modifies the polarity on the first bus and qualifies the synchronizing unit, whose output clock signal has its phase shift anticipated in comparison to that of the other units, as the master unit.

The circuit as claimed in the invention is characterized by the fact that each slave unit constitutes a standby unit readily available to replace the master unit with the following advantages:

– possibility of large pulling-in fields;

– high frequency stability of the master clock.

Further characteristics of the invention will be made clear by the following description relating to an example of the invention and completed by the attached figures where:

– fig. 1 shows the block diagram of a power station having the circuit as claimed by the invention;

– fig. 2 shows in detail one of the synchronizing units US of fig. 1;

– fig. 3 and 4 show wave forms relating to the synchronizing unit US illustrated in fig. 2.

In fig. 1, the reference $UA_1, UA_2, \ldots, UA_n$ indicates as many power units which, together with the circuit according to the invention, are part of a power station for telecommunications systems feeding a load Z. Said circuit provides the presence of *n* synchronizing units $US_1, US_2, \ldots, US_n$, each of which is designed to provide a synchronizing clock signal $CK_1, CK_2, \ldots, CK_n$ for the respective power unit.

Each synchronizing unit US has been designed to receive an activation signal CA on its input, as well as to be connected to the remaining units by means of a first and second bus CSM and SM. The first unit which receives the activation signal CA on its input acts as a master unit and is so qualified by applying a predetermined polarity to the first bus CSM and sending its own clock signal to the second bus SM.

The other units, when activated, detect the said polarity on the first bus CSM and are characterized as slave units by synchronizing its own clock signal with the clock signal of the second bus SM.

In the event of the master unit being subject to failure or if it is intentionally disconnected, it changes the polarity present on the first bus CSM, thus enabling one of the remaining units to be qualified as master.

The slave units detect the presence of said polarity variation: in particular said variation is detected by the US unit whose output clock has its phase shift anticipated in comparison to the clock signals of the remaining units. Said unit is characterized therefore as master unit, it resets the polarity on the first bus and delivers its own clock signal to the second bus, which is qualified as master synchronizing clock signal.

If two or more units detect the absence of the master unit at the same time and all of them are characterized as such, their respective oscillators tend to drift towards their own nominal frequencies and as a consequence, after just a few instants, the unit having the clock signal anticipated in comparison to that of the other units will be qualified as master unit.

The invention as claimed provides also the possibility of synchronizing the power station to the electrical power distribution line, and for this purpose there is also a third and a fourth bus, hereinafter referred to as mains synchronism control CSR and mains synchronism SR.

When synchronization to the mains is required, the CSR signal is activated, and this situation is taken by the master module which synchronizes its own oscillator to the clock signal present on the fourth bus SR. The master unit then delivers a clock signal, synchronized to the SR clock signal, to the second bus SM thus determining, as a consequence, the synchronization as well of the slave units.

Fig. 2 illustrates in detail one of the synchronizing units US, shown in fig. 1. Said unit includes a phase locking circuit PLL, multiplexing means MMX, master-slave characterizing means CMS and bus driving means MPB.

The phase locking circuit PLL provides the presence of a phase comparator PC and of a voltage controlled oscillator VCO to the output of which a frequency divider DV is connected.

The PC unit receives the external clock signal CKE on the first input and the internal clock signal CKI on the second input, this latter signal being available at the output of the frequency divider DV. In diagrams A and B of fig. 3, a hypothetic phase relationship between the CKE sequence pulses and the CKI sequence pulses is illustrated, as well as the signals delivered by the PLL unit in response to the reception of the said sequences. The CKI pulses' length has been on purpose varied in order to better evidence the PLL unit operation.

In particular, the PC unit delivers to the first output $U_1$ (see diagram C) a pulse sequence with a duration that is proportional to the interval of time between the transition of the CKE signal and the transition of the CKI signal. Pulses with a duration proportional to the interval of time between a positive transition of the CKE signal and a positive transition of the CKI signal, having a positive sign or a negative sign if the CKE signal is anticipated, or delayed, in comparison to the CKI signal, are available at the output $U_2$ (see diagram D).

The VCO unit receives a signal V on its input which determines a modification of the frequency of the CKI signal aiming to cancel any deviations from the CKE signal's frequency.

The PLL circuit described above is characterized in that it has a very high loop gain with consequent low immunity to interferences. The invention includes the presence of means adapted to limit the PLL's dynamic loop gain when the mains synchronism control CSR is active, thus increasing the circuit's immunity to any interference present on the mains synchronism SR: in fact, said interference could cause negative effects to the power unit UA in operation. The means described above are a part of the multiplexing means MMX and are adapted in such a way as to chop the signal available at the PLL's output $U_2$ by means of an electronic switch I, controlled by the pulses corresponding to the output of a monostable circuit MN adapted to receive the PLL's output $U_1$. The pulses corresponding to the output of the MN unit are illustrated in diagram E of fig. 3.

The signal V reaches the VCO unit through a first multiplexer $MT_1$ which receives the pulses from the $U_2$ output of the PC unit on its first and second input, the pulses from the switch I output on its third input and a monitoring voltage $V_c$, (through a first and second resistance $R_1$ and $R_2$ and stabilized by a Zener diode DZ), on its fourth input.

The external clock signal CKE reaches the PC unit through a second multiplexer $MT_2$, which re-

ceives the mains synchronism SR pulses on its third input, and the master synchronism SM pulses on its first, second and fourth inputs.

The multiplexers $MT_1$ and $MT_2$ receive signals coming from the master-slave qualifying means CMS on their control inputs. The activation control CA, a mains synchronism control CSR and a master synchronism control CSM are delivered to the input of the master-slave qualifying means CMS. The CSR control reaches the first control input of the $MT_1$ and $MT_2$ units through an inverter circuit $I_1$. The CA control reaches the second control input of the $MT_1$ and $MT_2$ units through a logical sum circuit $O_1$ which reveives the output Q of a bistable circuit FF of the D type on its second input. The bistable circuit FF recevies the internal clock CKI on its data input, and the same internal clock CKI on its timing input through a logical sum circuit $O_2$ which receives the SM pulses on its second input through an inverting circuit $I_2$.

The FF unit has the enabling input connected to the output of another logical sum unit $O_3$ which receives the said CA control on its first input and on its second input the output of a logical product circuit $A_1$ adapted to receive through an inverting circuit $I_3$ the CSM control signal as well as the output $\overline{Q}$ of FF.

The bus driving means MPB include a first and second transistor $T_1$ and $T_2$ having the emitter and collector connected in series respectively to said first and second bus. The base of $T_1$ is connected to the output Q of FF by means of a resistance $R_3$, and also to the emitter by means of a resistance $R_4$. The base of $T_2$, on the other hand, is connected to the output Q of FF by means of a logical product circuit $A_2$ and a resistance $R_5$. The $A_2$ unit receives the clock signal CKI on its second input. A resistance $R_6$ is connected between the base and the emitter of $T_2$.

The operation of the structure as described above is hereinafter described using of the waveforms illustrated in fig. 4, wherein diagram a) shows the activation signal CA which, when the unit is disconnected, presents a high logical value.

Let us assume that the unit in question is the first unit activated and that the mains synchronism signal CSR is active so as to synchronize the said unit to the electrical power distribution line. The signal CSR is illustrated in diagram b of fig. 4.

In these conditions, the mains synchronism pulses SR correspond to the output of $MT_2$, while the pulses available at the output of the switch I correspond to the output of $MT_1$. In relation to the phase difference between the internal clock CKI and the external clock CKE, said pulses determine the charge or discharge of a condenser (not illustrated) present in the VCO unit and correct the frequency of the CKI pulses until it coincides with that of the CKE = SR pulses.

When the activation control CA assumes logical value zero, the FF unit is enabled to transfer the logical levels present on its data input (see diagram c of fig. 4) to output Q in correspondence with the positive transitions of the pulses available at the output of the $O_2$ (see diagram d).

As the pulses applied to the timing input of FF are delayed in comparison to the pulses applied to the data input (as the former pass through the $O_2$ unit), on the first positive transition of the pulses available at the output of the latter unit, the activation of the Q output of FF is registered (see diagram e) and consequently the conduction of the transistor $T_1$ which applies a zero polarity to the first bus CSM (see diagram f). The output Q of FF also determines the enabling of the $A_2$ unit which sends the CKI pulses, provided by the PLL unit, to the second bus SM (see diagram g).

The presence of said zero polarity on the first bus CSM is detected by the remaining units on the activation of the relative CA signal. The delivery of the SM signal present on the second bus and at the output of $MT_2$ and of the signal available at the $U_2$ output of PLL to the output of $MT_1$ occurs in fact in said units. In this manner the slave units are synchronized with the SM pulses provided by the master unit, and as the latter is synchronized with the SR pulses, a synchronization of all the units with the SR pulses is obtained.

If the mains synchronism signal CSR is switched off, the master unit delivers the voltage $V_z$ to the output of $MT_1$ and the clock signal, provided by the respective PLL unit, to the output of $MT_2$. The presence of the resistance $R_2$ and the internal capacity of the VCO unit assure therefore that the PLL unit (associated to the master unit) gradually tends to oscillate at its nominal frequency thus avoiding the danger of sudden phase shifts.

When the master unit receives a switching off instruction (CA signal with logical value one) FF is no more enabled and generates a logical value zero which cuts off the transistor $T_1$. The slave units detect the presence of polarity "one" on the CSM bus and the unit whose CKI clock has an anticipated phase is qualified as master unit. As all the units have a phase coincidence, it may be that two or more units are characterized as master and consequently their respective PLL units tend to shift towards their nominal frequency. When this phase difference between the said units become an appreciable entity (see diagram h of fig. 4 where the clock CKI' of a generical unit is shown) only the unit having ist phase anticipated remains qualified as master. When there is no master unit, a signal obtained from the sum of the clock signals of all the units is registered at the output of the $O_2$ unit (see diagram i); said signal, reaching the timing input of FF, enables the unit which has an anticipated phase to keep output Q active (see diagram l), while the output Q' of the FF unit, whose clock CKI' has its phase delayed, is disconnected as illustrated in diagram m.

The circuit as claimed fully meets the requirements evidenced at the beginning of this description as it is adapted to synchronize a plurality of power units each with the other and to the electrical power distribution line and it further avoids that many units remain qualified as master unit before the phase difference among the single units assumes values that could cause the troubles mentioned before.

## Claims

1. Synchronizing circuit for a plurality of power units, especially for telecommunications systems, where a synchronizing unit emitting a clock signal synchronizing the relevant power unit is associated with each power unit, *characterized by* the fact that each of synchronizing units ($US_1$, $US_2$, ..., $US_n$) has been designed to receive an activation signal (CA) on the input, to be connected to the remaining units through a first and a second bus (CSM and SM); by the fact that the first synchronizing unit (US) which receives said activation signal (CA) on its input is qualified as master unit and applies a predetermined polarity to the first bus (CSM) and a clock signal to the second bus (SM) adapted to synchronize the remaining units which, in response to the detection of said polarity on the first bus (CSM), are qualified as slave units, and by the fact that when the master synchronizing unit no more receives said activation signal (CA) on the input, it modifies the polarity on the first bus (CSM), thus enabling the unit whose output clock signal (CK) has the phase anticipated in comparison with the others, to be qualified as master unit.

2. Circuit as described in claim 1, characterized by the fact that each of said synchronizing units (US) is also connected to the remaining units by means of a third and a fourth bus (CSR and SR) which respectively receive a mains synchronism (CSR) and a clock signal (SR) that is synchronized with the electrical power distribution line, further characterized by the fact that when the main synchronism signal (CSR) is operating, the master unit synchronizes its clock signal (SR), the clock (CK) available on its output and the clock applied to said second bus (SM) with said main synchronism.

3. Circuit as described in claims 1 and 2, characterized by the fact that each synchronizing unit (US) provides the presence of the following characteristic elements:

– a phase locking circuit (PLL) designed to receive the clock signal (CKE), present on the second or on the fourth bus (SM or SR), on its first input, the clock signal (CKI) on its second input and the monitoring signal (V) of the respective oscillator on its third input, furthermore designed to deliver to a first output ($U_1$) a sequence of pulses with a length proportional to the time interval between a transition of the signal applied to its first input and a transition of the signal applied to its second input, and to its second output ($U_2$) pulses whose the length is proportional to the time interval between two positive transitions of the signals applied to said first and second input and whose sign is positive or negative if the signal (CKE) applied to its first input is anticipated or delayed in comparison to the signal applied to its second input (CKI);

– multiplexing means (MMX) having their input connected to said second and fourth bus (SM, SR) as well as to said first and second output ($U_1$, $U_2$) of the phase locking circuit (PLL) and also having their outputs connected to said first and third input (CKE, V) of the phase locking circuit;

– master-slave characterizing means (CMS) having their input connected to said first and third bus (CMS, CSR), designed to receive said activation signal (CA) on their input as well as to deliver to the output the monitoring signals of said multiplexing means (MMX);

– bus driving means (MPB) which receive on the input the clock signal (CK) available on the output of the phase locking circuit (PLL) and designed to send said clock signals to the second bus (SM), as well as to apply said polarity to the first bus (CSM), when an output (Q) of the master-slave characterizing means (CMS) is operating.

4. Circuit as described in claim 3, characterized by the fact that said multiplexing means (MMX) provide the following characteristic elements:

– a first multiplexer ($MT_1$) designed to receive the signal available on the second output ($U_2$) of the phase locking circuit (PLL) on its first and second input, the same signal chopped on its third input and a monitoring voltage ($V_z$), stabilized by a Zener diode (DZ) through a first and second resistance ($R_1$, $R_2$) on its fourth input;

– a chopping switch (I) whose input is connected to the second output of the phase locking circuit (PLL) and whose output is connected to the third input of the first multiplexer ($MT_1$);

– a monostable circuit (MN) whose input is connected to the first output ($U_1$) of the phase locking circuit (PLL), while the output reaches the control input of said chopping switch (I);

– a second multiplexer ($MX_2$) having its first, second and fourth input connected to said second bus (SM) and its third input connected to said fourth bus (SR).

5. Circuit as described in claim 3, characterized by the fact that said master-slave characterizing means (CMS) provide the following characteristic elements:

– a D type bistable circuit (FF) designed to receive the pulses (CKI) generated by the phase locking circuit (PLL) at the data input;

– a first logical sum circuit ($O_1$) designed to receive the output (Q) of the bistable circuit on the first input and said activation signal (CA) on its second input;

– a second logical sum circuit ($O_2$), having the output connected to the timing input of the bistable circuit (FF), whose first input receives the clock signal (CKI) generated by the phase locking circuit (PLL), while the second input is connected to the second bus (SM);

– a third logical sum circuit ($O_3$) whose output is connected to the enabling input of the bistable circuit (FF), whose first input receives said activation signal (CA) while the second input is connected to the output of a first logical product unit ($A_1$) having its inputs connected to the inverted output of the bistable circuit (FF) and to said first bus (CSM).

6. Circuit as described in claim 3, characterized by the fact that said bus driving means (MPB) provide the following characteristic elements:

– a first transistor ($T_1$) having the emitter and the collector connected in series to the first bus (CSM) and having the base connected to the output of the bistable circuit (FF);

– a second logical product circuit ($A_2$) whose first input receives the clock signal (CK) generated by the phase locking circuit (PLL), while the second input is connected to the output (Q) of the bistable circuit (FF);

– a second transistor ($T_2$) having the collector and the emitter connected in series to the second bus and having the base connected to the output of the second logical product circuit ($A_2$).

## Patentansprüche

1. Synchronisierungskreis für eine Mehrzahl von Leistungseinheiten, besonders für Fernmeldesystem, in denen eine Synchronisierungseinheit, die ein Clocksignal zur Synchronisierung der betreffenden Leistungseinheit ausgibt, jeder Leistungseinheit zugeordnet ist, von der Tatsache *gekennzeichnet*, dass jede Synchronisierungseinheit ($US_1$, $US_2$, ..., $US_n$) dazu geeignet ist, am Eingang ein Aktivierungssignal (CA) zu bekommen, mit den übrigen Einheiten durch einen ersten und einen zweiten Bus (CSM und SM) verbunden zu sein, von der Tatsache, dass die erste Synchronisierungseinheit (US), die am Eingang das genannte Aktivierungssignal (CA) erhält als Mastereinheit arbeitet, wobei an den ersten Bus (CSM) eine vorgegebene Polarität und an den zweiten Bus (SM) ein Synchronisierungsclock für die Synchronisierung der übrigen Einheiten angelegt wird, die als Reaktion zu der Erfassung dieser Polarität am ersten Bus (CSM) als Slave arbeiten, und dass die Master-Synchronisierungseinheit, wenn sie am Eingang kein obengenanntes Aktivierungssignal (CA) erhält, die Polarität am ersten Bus (CSM) ändert, wobei die Einheit, deren Ausgangsclocksignal (CK) eine voreilende Phase aufweist, als Mastereinheit fungiert.

2. Kreis, wie im Anspruch 1 beschrieben, von der Tatsache gekennzeichnet, dass jede von den genannten Synchronisierungseinheiten (US) auch mit den übrigen Einheiten durch einen dritten und einen vierten Bus (CSR und SR) angeschlossen ist, die ein Netzsynchronisierungssignal (CSR) und ein mit dem Verteilungsnetz synchronisiertes Clocksignal (SR) erhalten, ferner davon gekennzeichnet, dass die Mastereinheit beim aktiven Netzsynchronisierungssignal (CSR) das eigene Clocksignal (SR), das am eigenen Ausgang verfügbare Clock (CK) und das Clock am genannten zweiten Bus (SM) mit dem oben erwähnten Netzsynchronisierclock SR synchronisiert.

3. Kreis, wie in den Ansprüchen 1 und 2 beschrieben, davon gekennzeichnet, dass jede Synchronisierungseinheit (US) folgende charakteristischen Elemente vorsieht:

Einen phasenmässigen Kreis (PLL), dazu geeignet, das Clocksignal (CKE), das am zweiten und am vierten Bus ansteht (SM oder SR) an seinem ersten Eingang, das Clocksignal (CKI) an seinem zweiten Eingang und das Kontrollsignal (V) des betreffenden Oszillators an seinem dritten Eingang zu erhalten, ferner ist er dazu geeignet, an den ersten Ausgang ($U_1$) eine Impulsfolge zu liefern, deren Länge mit dem Zeitabstand zwischen einem an den ersten Eingang aufgebrachten Signalübergang und dem an den zweiten Eingang aufgebrachten Signalübergang proportional ist, und an den zweiten Ausgang ($U_2$) Impulse zu liefern, deren Länge mit dem Zeitabstand zwischen zwei positiven Übergängen der Signale proportional ist, die an den obengenannten ersten und zweiten Eingängen angelegt werden und deren Zeichen positiv oder negativ ist, wenn das Signal (CKE) am ersten Eingang voreilt bzw. verzögert, im Verhältnis zum Signal am zweiten Eingang (CKI).

Multiplexer-Mittel (MMX), deren Eingang mit dem obengenannten zweiten und vierten Bus (SM, SR), sowie mit dem genannten ersten und zweiten Ausgang ($U_1$, $U_2$) des PLL-Kreises verbunden ist und deren Ausgänge mit genanntem ersten und dritten Eingang (CKE, V) des PLL-Kreises verbunden ist.

Master-Slave-Mittel (CMS), deren Eingang mit dem obengenannten ersten und dritten Bus (CSM, CSR) verbunden ist, dazu geeignet, das obengenannte Aktivierungssignal (CA) am Eingang zu erhalten, sowie dem Ausgang die Kontrollsignale der obigen Multiplexer-Mittel (MMX) zu liefern.

Bus-Steuermittel (MPB), die am Eingang das am Ausgang des PLL-Kreises verfügbare Clocksignal (CK) erhalten und die dazu geeignet sind, diese Clocksignale an den zweiten Bus (SM) zu senden, sowie die genannte Polarität am ersten Bus (CSM) anzulegen, wenn ein Ausgang (Q) der Master-Slave-Mittel (CMS) in Betrieb ist.

4. Kreis, wie im Anspruch 3 beschrieben, von der Tatsache gekennzeichnet, dass die obengenannten Multiplexer-Mittel (MMX) folgende charakteristische Elemente vorsehen:

Einen ersten Multiplexer ($MT_1$), dazu geeignet, am ersten und zweiten Eingang das am zweiten Ausgang ($U_2$) des PLL-Kreises verfügbare Signal, am dritten Eingang dasselbe gedrosselte Signal und am vierten Eingang eine Kontrollspannung ($V_z$) zu erhalten, die von einer Zenerdiode (DZ) über einen ersten und einen zweiten Widerstand ($R_1$, $R_2$) stabilisiert ist.

Einen Drosselschalter (I), dessen Eingang mit dem zweiten Ausgang des PLL-Kreises und dessen Ausgang mit dem dritten Eingang des ersten Multiplexer ($MT_1$) verbunden sind.

Einen monostabilen Kreis (MN), dessen Eingang mit dem ersten Ausgang ($U_1$) des PLL-Kreises verbunden ist, während der Ausgang den Kontrolleingang des obengenannten Drosselschalters (I) erreicht.

Einen zweiten Multiplexer ($MX_2$), wo der erste, zweite und vierte Eingang mit dem obengenannten zweiten Bus (SM) und der dritte Eingang mit dem obengenannten vierten Bus (SR) verbunden sind.

5. Kreis, wie im Anspruch 3 beschrieben, von der Tatsache gekennzeichnet, dass die obengenannten Master-Slave-Mittel (CMS) folgende charakteristischen Elemente vorsehen:

Einen bistabilen Kreis des Types D (FF), dazu geeignet, die von dem PLL-Kreis erzeugten Impulse (CKI) am genannten Eingang zu erhalten.

Einen ersten Kreis logischer Addition ($O_1$), dazu geeignet, den Ausgang (Q) des bistabilen Kreises am ersten Eingang und das obengenannte Aktivierungssignal (CA) am zweiten Eingang zu erhalten.

Einen zweiten Kreis logischer Addition ($O_2$), wo der Ausgang mit dem Takteingang des bistabilen Kreises (FF) verbunden ist, dessen erster Eingang das vom PLL-Kreis erzeugte Clocksignal (CKI) erhält, während der zweite Eingang mit dem zweiten Bus verbunden ist (SM).

Einen dritten Kreis logischer Addition ($O_3$), dessen Ausgang mit dem Freigabeeingang des bistabilen Kreises (FF) verbunden ist, dessen erster Eingang das obengenannte Aktivierungssignal (CA) und der zweite Eingang mit dem Ausgang einer ersten Einheit logischer Multiplikation ($A_1$) verbunden sind, dessen Eingänge mit dem invertierten Ausgang des bistabilen Kreises (FF) und mit dem obengenannten ersten Bus (CSM) verbunden sind.

6. Kreis, wie im Anspruch 3 beschrieben, von der Tatsache gekennzeichnet, dass die obengenannten Bus-Steuermittel (MPB) folgende charakteristischen Elemente vorsehen:

Einen ersten Transistor ($T_1$), wo der Emitter und der Kollektor mit dem ersten Bus (CSM) in Serie geschaltet sind und wo die Basis mit dem Ausgang des bistabilen Kreises (FF) verbunden ist.

Einen zweiten Kreis logischer Multiplikation ($A_2$), dessen erster Eingang das von dem PLL-Kreis erzeugte Clocksignal (CK) erhält und der zweite Eingang mit dem Ausgang (Q) des bistabilen Kreises (FF) verbunden ist.

Einen zweiten Transistor ($T_2$), wo der Kollektor und der Emitter mit dem zweiten Bus in Serie geschaltet sind, und wo die Basis mit dem Ausgang des zweiten Kreises logischer Multiplikation ($A_2$) verbunden ist.

## Revendications

1. Circuit de synchronisation pour une pluralité d'unités d'alimentation, en particulier pour systèmes de télécommunication, où une unité d'alimentation émettant un signal clock pour la synchronisation de l'unité d'alimentation relative est associée à chaque unité d'alimentation, *caractérisée* par le fait que chaque unité d'alimentation ($US_1$, $US_2$, ..., $US_n$) a été conçue pour recevoir un signal d'activation (CA) en entrée, à connecter aux unités restantes à travers un premier et un second bus (CSM et SM); par le fait que la première unité de synchronisation (US) qui reçoit ledit signal d'activation (CA) à son entrée est qualifiée comme unité principale (master) et applique une polarité prédéterminée au premier bus (CSM) et un signal clock au second bus (SM) destiné à synchroniser les unités restantes qui, en réponse au relevé de cette polarité sur le premier bus (CSM), sont classées comme unités d'asservissement (slave), et par le fait que quand l'unité de synchronisation principale ne reçoit plus ledit signal d'activation (CA) en entrée, elle modifie la polarité du premier bus (CSM) permettant à l'unité, dont le signal clock (CK) en sortie a la phase anticipée par rapport aux autres, d'être classée comme unité principale.

2. Circuit comme décrit au point 1, caractérisé par le fait que chacune desdites unités (US) est connectée même aux unités restantes au moyen d'un troisième et un quatrième bus (CSR) et un signal clock (SR) qui est synchronisé avec la ligne de distribution d'alimentation électrique, caractérisée en plus par le fait que quand le signal du synchronisme principal (CSR) est en fonction, l'unité principale synchronise son signal clock (SR), le clock (CK) disponible à sa sortie et le clock appliqué audit second bus (SM) avec ledit synchronisme principal.

3. Circuit comme décrit aux points 1 et 2, caractérisé par le fait que chaque unité de synchronisation (US) prévoit la présence des éléments suivants caractéristiques:

– un circuit de blocage de phase (PLL) conçu pour recevoir le signal (CKE), présent sur le second ou sur le quatrième bus (SM ou SR), sur sa première entrée, le signal clock (CKI) sur sa deuxième entrée et le signal de relevé (V) de l'oscillateur respectif sur sa troisième entrée, conçu en plus pour délivrer à une première sortie ($U_1$) une séquence d'impulsions ayant une durée proportionnelle à l'intervalle de temps entre une transition du signal appliqué à sa première entrée et une transition du signal appliqué à sa deuxième entrée, et à sa deuxième sortie ($U_2$) des impulsions dont la durée est proportionelle à l'intervalle de temps entre deux transitions positives du signal appliqué aux première et deuxième entrées et dont le signe est positif ou négatif si le signal (CKE) appliqué à sa première entrée est anticipé ou retardé par rapport au signal appliqué à sa deuxième entrée (CKI);

– moyens de multiplexage (MMX) ayant leur entrée connectée aux susdits deuxième et quatrième bus (SM, SR), aussi bien qu'aux première et deuxième sorties ($U_1$, $U_2$) du circuit de blocage de phase (PLL) ayant aussi leurs sorties connectées aux susdites première et troisième entrées (CKE, V) du circuit de blocage de phase;

– moyens de caractérisation de l'asservissement principal «master-slave» (CMS) ayant leur entrée connectée aux susdits premier et troisième bus (CSM, CSR), conçus pour recevoir le susdit signal d'activation (CA) sur leur entrée aussi bien que pour délivrer à la sortie les signaux de relevé desdits moyens de multiplexage (MMX);

– moyens de pilotage du bus (MPB) lesquels reçoivent en entrée le signal clock (CK) disponible à la sortie du circuit de blocage de phase (PLL) et conçus pour envoyer les signaux clock mentionés au deuxième bus (SM), aussi bien que pour appliquer ladite polarité au premier bus (CSM), quand une sortie (Q) des moyens de caractérisation de l'asservissement principal «master-slave» (CSM) est en fonction.

4. Circuit comme décrit au point 3, caractérisé par le fait que lesdits moyens de multiplexage (MMX) prévoient les éléments suivants caractéristiques:

– un premier multiplexeur ($MT_1$) conçu pour recevoir le signal disponible sur la deuxième sortie ($U_2$) du circuit de blocage de phase (PLL) sur ses première et deuxième entrées, le même signal partialisé sur sa troisième entrée et un voltage d'analyse ($V_z$), stabilisé par un diode Zener (DZ) à travers une première et une seconde résistance ($R_1$, $R_2$) sur sa quatrième entrée;

– un disjoncteur (I) dont l'entrée est connectée à la deuxième sortie du circuit de blocage de phase (PLL) et dont la sortie est connectée à la troisième entrée du premier multiplexeur ($MT_1$);

– un circuit monostable (MN) dont l'entrée est connectée à la première sortie ($U_1$) du circuit de blocage de phase (PLL), tandis que la sortie rejoint l'entrée de contrôle dudit disjoncteur (I);

– un deuxième multiplexeur ($MX_2$) ayant ses première, deuxième et quatrième entrées connectées au deuxième bus mentionné (SM) et sa troisième entrée connectée audit quatrième bus (SR).

5. Circuit comme décrit au point 3, caractérisé par le fait que lesdits moyens de caractérisation d'asservissement principal «master-slave» (CMS) prévoient les éléments suivants caractéristiques:

– un circuit bistable type D (FF) conçu pour recevoir les impulsions (CKI) générées par le circuit de blocage de phase (PLL) à l'entrée des données;

– un premier circuit de somme logique ($O_1$) conçu pour recevoir la sortie (Q) du circuit bistable sur la première entrée et ledit signal d'activation (CA) sur sa deuxième entrée;

– un deuxième circuit de somme logique ($O_2$) ayant la sortie connectée à l'entrée de temporisation du circuit bistable (FF), dont la première entrée reçoit le signal clock (CKI) généré par le circuit de blocage de phase (PLL), tandis que la deuxième entrée est connectée au deuxième bus (SM);

– un troisième circuit de somme logique ($O_3$) dont la sortie est connectée à l'entrée d'habilitation du circuit bistable (FF), dont la première entrée reçoit ledit signal d'activation (CA) tandis que la deuxième entrée est connectée à la sortie d'une première unité de produit ($A_1$) ayant ses entrées connectées à la sortie invertie du circuit bistable (FF) et audit premier bus (CSM).

6. Circuit comme décrit au point 3, caractérisé par le fait que lesdits moyens de pilotage bus (MPB) prévoient les éléments suivants caractéristiques:

– un premier transistor ($T_1$) ayant l'émetteur et le collecteur connectés en série au premier bus (CSM) et la base connectée à la sortie du circuit bistable (FF);

– un deuxième circuit logique de produit ($A_2$) dont la première entrée reçoit le signal clock (généré par le circuit de blocage de phase (PLL), tandis que la deuxième entrée est connectée à la sortie (Q) du circuit bistable (FF);

– un deuxième transistor ($T_2$) ayant le collecteur et l'émetteur connectés en série au deuxième bus et ayant la base connectée à la sortie du deuxième circuit logique de produit ($A_2$).

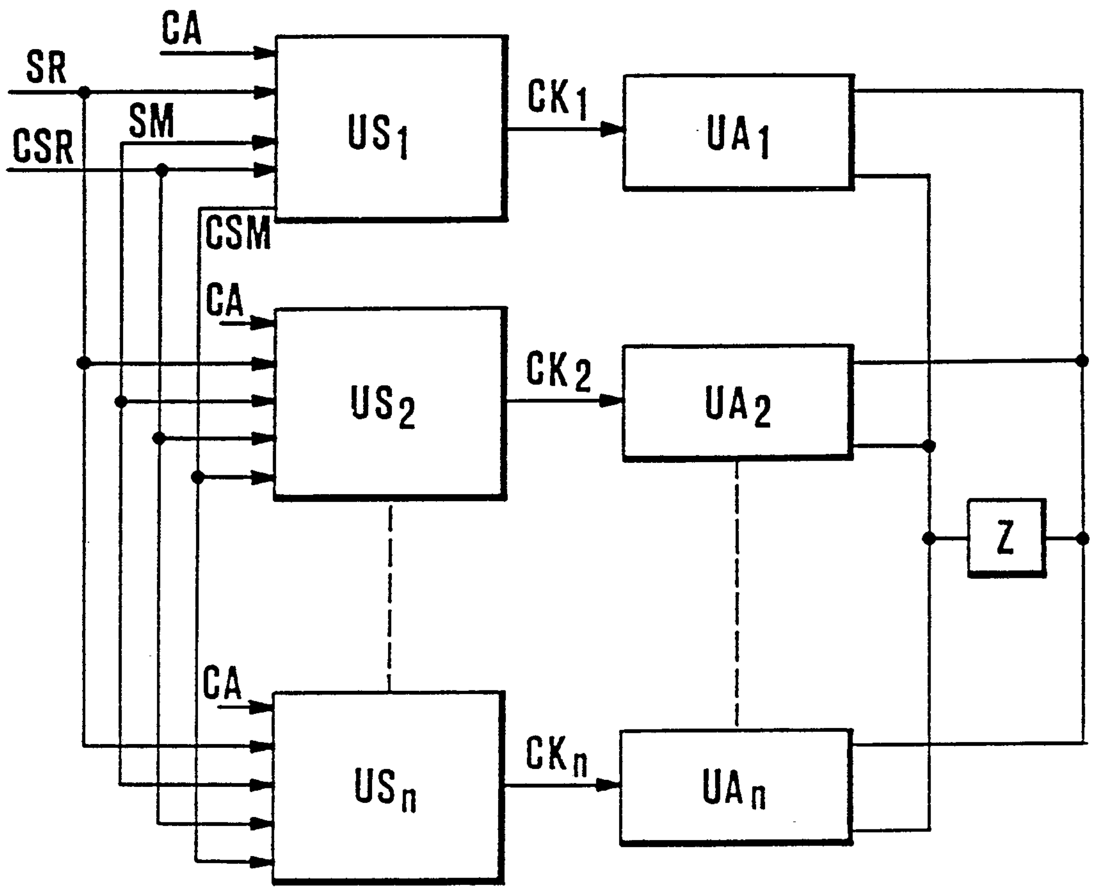


fig.1

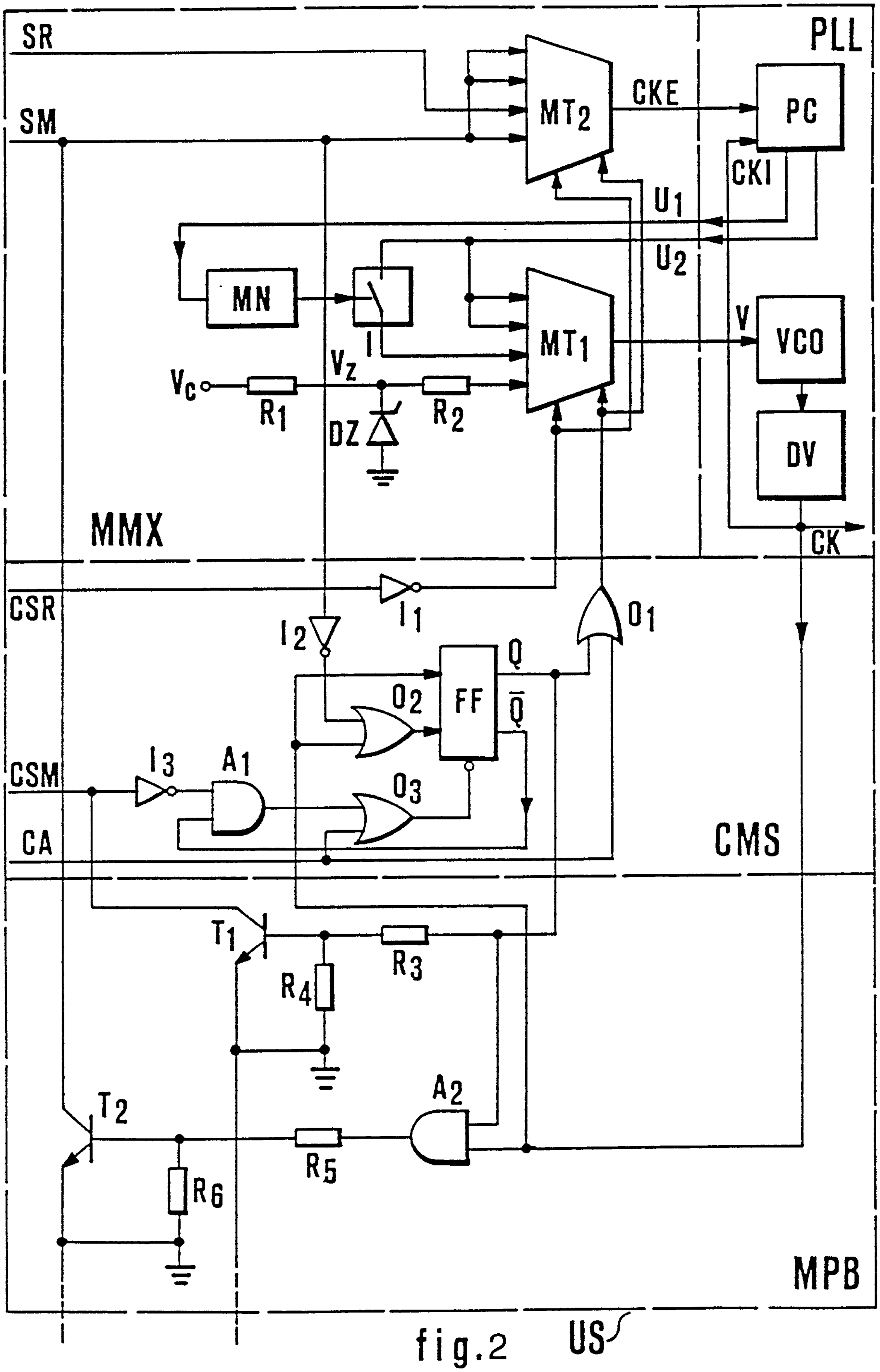
SR
SM
PLL
MT2
CKE
PC
CKI
U1
U2
MN
I
MT1
V
VCO
Vc
R1
Vz
DZ
R2
DV
MMX
CK
CSR
I1
I2
O1
Q
O2
FF
Q̄
CSM
I3
A1
O3
CA
CMS
T1
R3
R4
A2
T2
R5
R6
MPB

fig.2 US

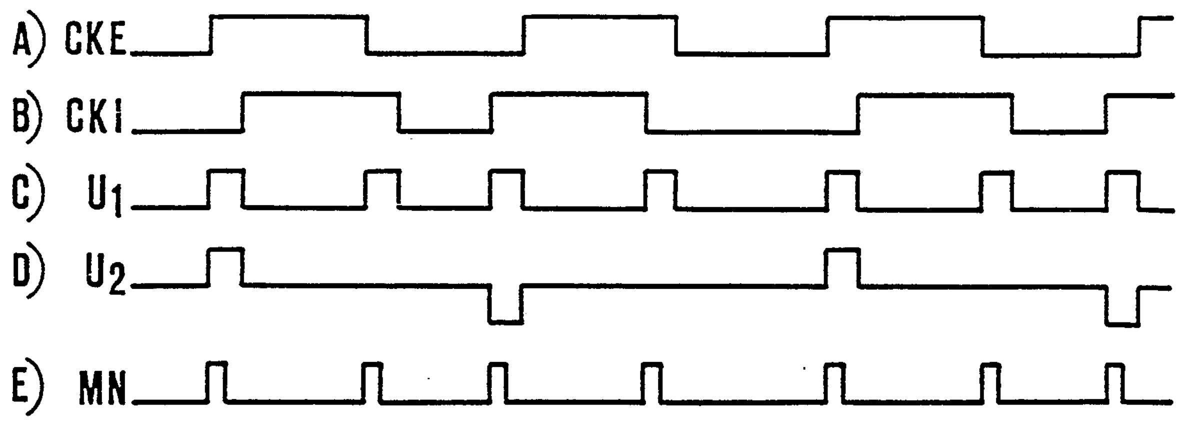
A) CKE
B) CKI
C) U1
D) U2
E) MN

fig.3

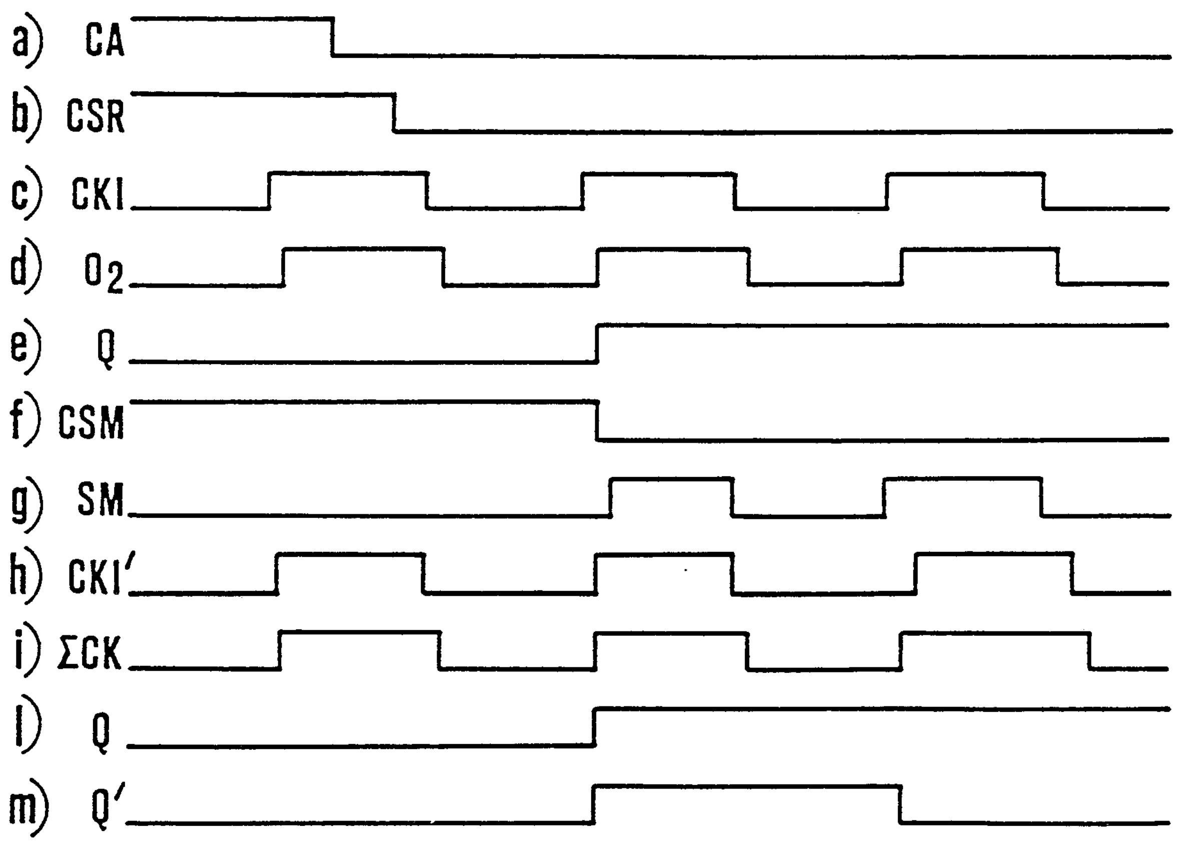
a) CA
b) CSR
c) CKI
d) O2
e) Q
f) CSM
g) SM
h) CKI′
i) ΣCK
l) Q
m) Q′

fig.4